Europäisches Patentamt

European Patent Office

Office européen des brevets

(11) Publication number: **0 381 777 B1**

# EUROPEAN PATENT SPECIFICATION

(45) Date of publication of patent specification: **01.03.95**   (51) Int. Cl.⁶: **B29D 30/68**

(21) Application number: **89908882.7**

(22) Date of filing: **27.07.89**

(86) International application number:
**PCT/JP89/00776**

(87) International publication number:
**WO 90/00965 (08.02.90 90/04)**

(54) **TIRE GROOVING APPARATUS AND METHOD.**

(30) Priority: **28.07.88 JP 189952/88**

(43) Date of publication of application:
**16.08.90 Bulletin  90/33**

(45) Publication of the grant of the patent:
**01.03.95 Bulletin  95/09**

(84) Designated Contracting States:
**DE FR GB**

(56) References cited:
**EP-A- 0 190 914       EP-A- 0 234 756**
**EP-A- 0 324 959       FR-A- 2 403 183**
**JP-A- 0 552 100       JP-A- 4 855 486**
**JP-A- 5 970 553       JP-A- 5 970 554**
**JP-A- 6 354 240       JP-A-56 162 633**
**JP-A-57 120 428       JP-A-59 215 849**
**JP-A-61 177 232       US-A- 3 835 591**
**US-A- 4 095 374       US-A- 4 663 889**

(73) Proprietor: **SUMITOMO RUBBER INDUSTRIES,
CO. LTD
No. 1-1, Tsutsui-cho 1-chome
Chuo-ku**

**Kobe-shi
Hyogo-ken 651 (JP)**

(72) Inventor: **KINUHATA, Satoru 6-10, Konan-cho
4-chome
Higashinada-ku
Kobe-shi
Hyogo 658 (JP)**
Inventor: **YAMADA, Seiki 6-3, Shimohozumi
3-chome
Ibaraki-shi
Osaka 567 (JP)**

(74) Representative: **Stewart, Charles Geoffrey
SP TYRES UK LIMITED
Technical Division
Fort Dunlop,
Erdington,
Birmingham B24 9OT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a tyre grooving apparatus and method wherein lateral runout and centre deviation or only the centre deviation are detected and thereby the cutting position of a cutter is corrected.

Conventionally, the work of grooving a tyre for trial manufacturing or limited scale production, namely carving the tread pattern grooves in a plain cured tyre without any tread pattern is generally performed by means of a hand cutter and it requires skill and a lot of time.

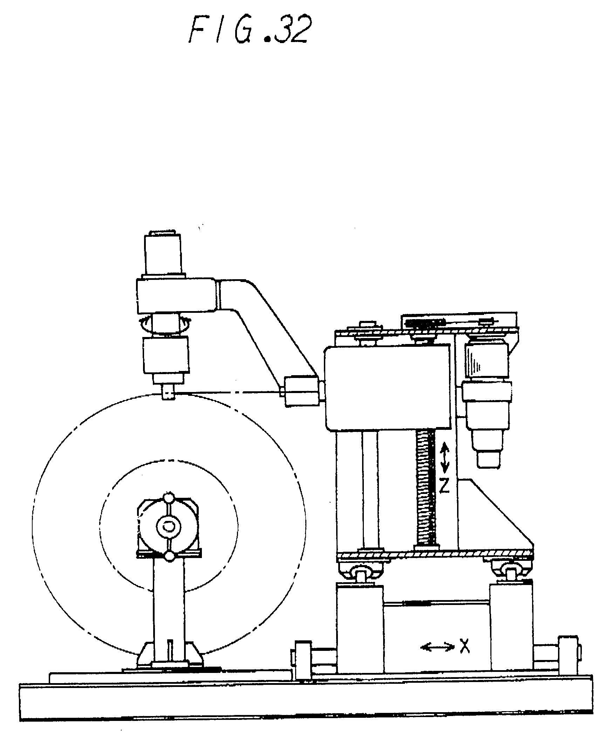

Taking the above-mentioned problem into consideration, the present applicant has already proposed a tyre grooving apparatus, as shown in Figure 32, having, as main constructive features, a cutting device attached to a vertically movable carriage, which is moved in parallel and perpendicular directions with reference to the tyre support shaft; a pivotable arm support shaft which extends from the carriage; a pivotable arm attached to the support shaft; a cutter holder which is pivotably attached to the pivotable arm perpendicularly to the axis thereof; a cutter which is held by the end portion of the cutter holder; and the cutting position of the cutter is arranged to be on the extended axis of the support shaft (Japanese Unexamined Patent Publication Nos 54240/1988 and 177232/1986).

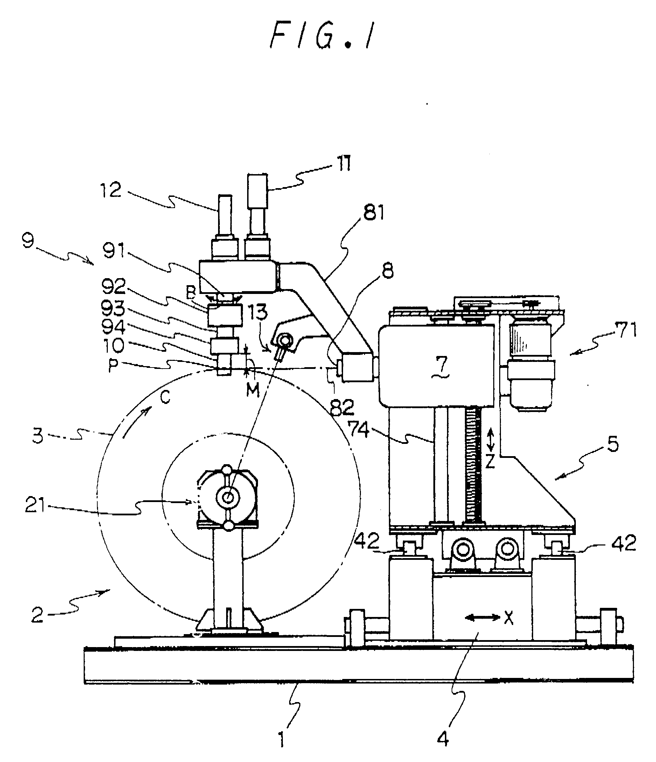

In the present specification, the cutting position of the cutter means the particular point of the cutter which is a certain distance (M) (including zero) from the bottom end of the cutter holder (refer to Figure 1).

Carving of tread pattern grooves in a plain tyre by the type grooving apparatus is carried out by setting the cutting position of the cutter to the tangential line (Processing Standard Point for Tread) of the plain tyre. Thus, since the cutting position of the cutter is kept always on the extended axis of the pivotable arm support shaft, namely on the tangential line of the plain tyre, the calculation of the amount of movement of the movable carriage and the pivotable arm becomes simple, the programming of computer programs becomes easy and accurate grooving becomes possible. However, when lateral runout in the direction of the tyre-width caused by deflation of the tyre itself or deviation of the tyre support occurs, even if grooving is carried out by a cutter controlled by a computer program so as to carve the prescribed tread pattern while the tyre is rotated, the position of grooves from the tread centre of tyres of the same size and specification differs for each tyre and the positions of grooves which ought to be at prescribed distances to the right and left sides of the tread centre C (the tyre equator) are different from each groove when a plurality of grooves are carved for the tyre, so that there arise problems with quality and variation in tyre quality and even a decrease of tyre strength.

However, even if the same kind of tyres are attached to the tyre supporting shaft of the tyre grooving apparatus in the same way, the tread centre position does not always coincide with the theoretical tread centre position set by the standard program for the tyre and slight deviation sometimes occurs because of the difference in dimensions on the right and left sides of the tyre caused during curing, deformation caused by inner pressure, improper engagement with the rim or the like.

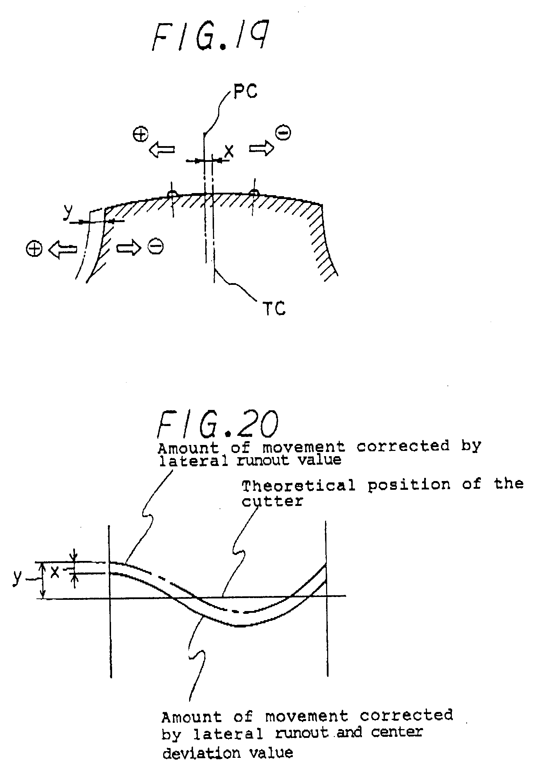

Accordingly, as shown in Figure 19, the amount y of lateral runout at the side of the tyre is not always equal to the amount of actual deviation of the tread centre TC to the tread centre PC set in the standard program. Therefore, even if the lateral runout at the side of the tyre is detected and the position of cutter is corrected to the measured value (the cutter is moved to follow the lateral runout) and then the grooving is performed, the position to be cut cannot be set to a prescribed distance from the tread centre of the tyre, and finally, the position of the tread grooves from the tread centre TC does not coincide in each tyre of the same kind.

Taking the above-mentioned problems of the conventional art into consideration, it is an object of the present invention to provide a tyre grooving apparatus and met6hod wherein the position of the cutter is corrected so all the positions of the tread grooves from the tread centre mutually coincide for each kind of tyre and for the tread grooves positions of the tyre to be at the prescribed positions to the right and left sides of the tread centre.

The tyre grooving apparatus of the present invention comprises:

(a) a tyre support device for rotatably supporting a tyre,

(b) a rotatable cutter support device,

(c) a pivotable arm which holds the cutter support device at the free end portion thereof,

(d) a vertically movable block having a rotatable shaft which pivotably holds the pivotable arm and mechanism to provide standard movement,

(e) a horizontally movable block holding the vertically movable block and having a mechanism for standard movement and a mechanism for a correction movement which can move the block at least in the transverse direction in parallel with the tyre support shaft of the tyre support device,

(f) a means for detecting the centre deviation of the tyre,

(g) a means for detecting the lateral runout of the tyre,
and
(h) a control means
and is characterised in that the control means comprises a standard movement operation portion which sets the cutter at the theoretical cutting position, and a correction movement operation portion which calculates the amount of correction movement for the cutter in accordance with input signals from the means for detecting the lateral runout of the tyre and the means for detecting the centre deviation of tyre, and operates the mechanism for correction movement mounted on the horizontally movable block in accordance with the calculated value.

Another aspect provides a tyre grooving method according to a standard program characterised by:
(a) a step of detecting lateral runout of the tyre,
(b) a step of detecting centre deviation of the tyre,
(c) a step of correcting the grooving position of the cutter in accordance with the detected values of lateral runout and centre deviation.

Preferably, the grooving position for the cutter is corrected according to a correction program provided independently to the standard program.

Since the tyre grooving apparatus of the present invention comprises a horizontally movable block having a mechanism for standard movement and a mechanism for correction movement whereby it can move the cutter at least in parallel with the tyre support shaft, a vertically movable block having the mechanism for standard movement whereby it can move the cutter in the up and down directions, a means of detecting lateral runout and centre deviation of the tyre or a means of detecting only the centre deviation, and a means of controlling the aforementioned mechanism, the horizontally movable block and the vertically movable block can be controlled according to the amount of standard movement, and the amount of standard movement is followed by the amount of correcting movement required according to the detected values of the detecting means so that the cutter can most suitably be positioned.

Moreover, according to the tyre grooving method of the present invention, the amount of standard movement of the horizontally movable block and the vertically movable block can be controlled in accordance with the standard program, and therewith the cutter can suitably be positioned by detecting of the lateral runout and centre deviation of the tyre or only the centre deviation thereof so that the amount of standard movement may be followed by the amount of corrected movement in accordance with the above detected values so that the cutter can most suitably be positioned.

Figures 1 and 2 are respectively a side view and a front view of one embodiment of tyre grooving apparatus of the present invention;

Figure 3 is a main functional block diagram of the tyre grooving apparatus shown in Figures 1 and 2;

Figure 4 is a block diagram showing the electrical construction of a main portion in the tyre grooving apparatus;

Figure 5 is a flow chart for carrying out the grooving on the basis of the data of premeasured lateral and centre deviations;

Figures 6 and 7 are respectively detailed flow charts of one embodiment relative to portions for detecting the lateral runout of the tyre and for detecting the centre deviation on the tyre tread surface, and the grooving portion in Figure 5, in which the centre deviation is detected at only one point;

Figures 8 and 9 are respectively detailed flow charts of another embodiment relative to portions for detecting the lateral runout of the tyre and for detecting the centre deviation on the tread surface, and the grooving portion in Figure 5, in which the centre deviation is detected in only one point;

Figures 10 and 11 are detailed flow charts of one embodiment relative to portions for detecting the lateral runout of the tyre and for detecting the centre deviation on the tread surface and the grooving portion in Figure 5, in which the centre deviation is detected at a plurality of points;

Figure 12 is a flow chart in which the grooving is performed while detecting the lateral runout of the tyre;

Figures 13 and 14 are respectively detailed flow charts relative to portions for detecting the lateral runout and centre deviation on the tyre tread surface, and a grooving portion in Figure 12;

Figure 15 is a flow chart in which the grooving is performed on the basis of the data of the centre deviation only;

Figures 16 and 17 are respectively detailed flow charts relative to a portion for detecting the centre deviation on the tyre tread surface and the grooving portion in Figure 15;

Figure 18 is a diagram for explaining one embodiment of the method of detecting the centre deviation;

Figure 19 is an explanatory illustration of lateral runout of tyre and centre deviation of tread;

Figure 20 is a graph showing the amount of correction movement of a cutter;

Figure 21 is an explanatory illustration of the construction of a driving mechanism of horizontally movable block;

Figure 22 is a schematic illustration of a device for moving a centre deviation detector;

Figures 23 to 31 are explanatory illustrations of the examples of the method of detecting centre deviation; and

Figure 32 is a schematic illustration of a conventional grooving apparatus.

The present invention is described in detail on the basis of embodiments, however the present invention is not limited to these embodiment.

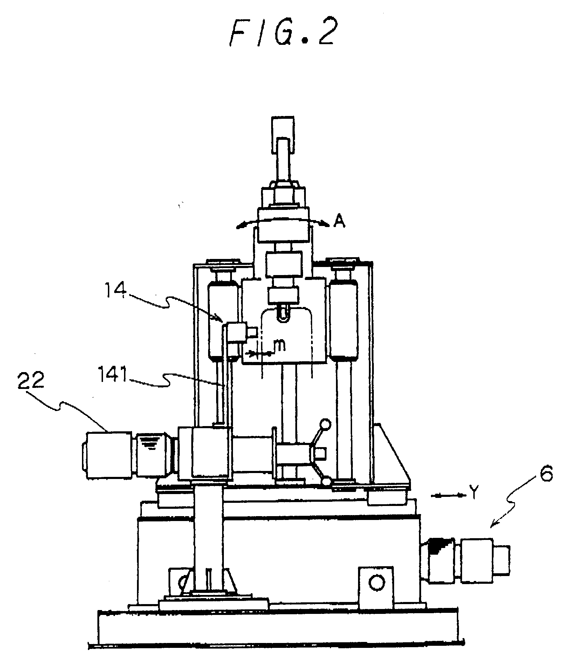

In the grooving apparatus shown in Figures 1 and 2, numeral 1 is a bed, numeral 2 is a tyre support device mounted on the bed 1, on which a tyre 3 is supported by a tyre support shaft 21 and rotated by means of a motor 22 in the direction of arrow C in Figure 1.

Numeral 4 is a base block which is movable along a guide bar supported by rails on the bed 1 by means of a motor (not shown) in the X-axis direction being perpendicular to the axis of the tyre support shaft 21. If the distance between the base block 4 and the tyre support shaft 21 is set to a specified value, the base block 4 is not required to be moved.

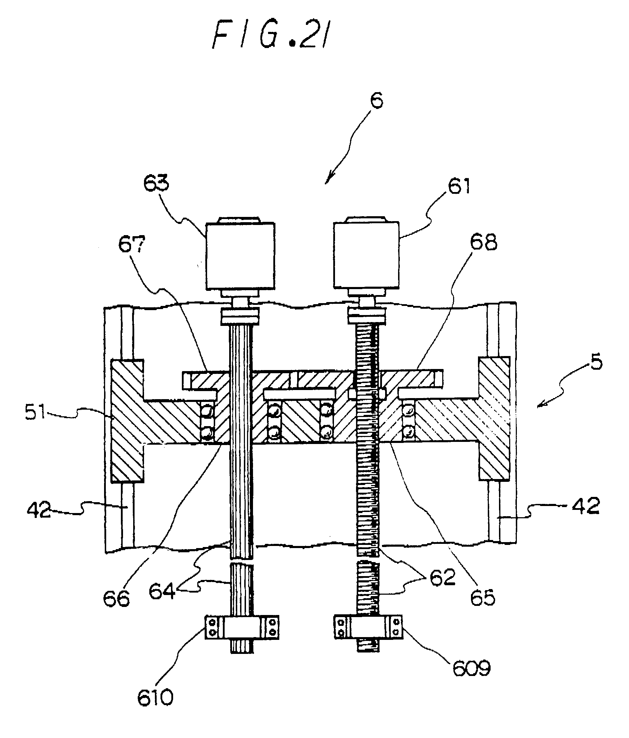

Numeral 5 is a horizontally movable block which is movable along a rail 42 on the base block 4 in the Y-axis direction which is parallel to the tyre support shaft 21 and numeral 6 is a device for driving the horizontally movable block, which comprises a mechanism for a standard movement and mechanism for a correction movement as shown in Figure 21.

Numeral 7 is a vertically movable block, which is movable along a guide shaft 74 on the horizontally movable block 5 by means of a device 71 for driving the vertically movable block in the Z-axis direction which is perpendicular to the bed 1.

Numeral 81 is a pivotable arm which is fixed to an arm support shaft 8 extended from the vertically movable block 7 in the X-axis direction and is rotatable round the axis 82 of the arm support shaft 8 in the direction of arrow A in Figure 2 by means of a motor (not shown) on the vertically movable block 7.

Numeral 9 is a cutter support device attached to and projecting perpendicularly from the pivotable arm 81 towards the aforementioned axis 82, wherein a cutter support frame 92 is attached to a support rod 91 which is supported by the pivotable arm 81. A cutter holder 94 is supported by the cutter support frame 92 with an insulator 93 located therebetween, and a cutter 10 is removably attached to the cutter holder 94 so that the cutting position P of the cutter is on the extended axis of the aforementioned axis 82, and further, there is provided means for the cutter 10 to be heated by a power supply (not shown).

Numeral 11 is a motor by which the cutter support device 9 may be rotated in the direction of the arrow B so as to allow the position of the cutter to be changed.

Numeral 12 is an actuator which may move the cutter support device 9 independently in the up and down directions in order for the cutting position P of the cutter 10 to be able to coincide with the axis 82.

Alternatively, in place of actuator 12, the cutting position P of the cutter 10 may be made coincident with the axis 82 by adjusting the position at which the cutter support device 9 is attached to the support shaft 91.

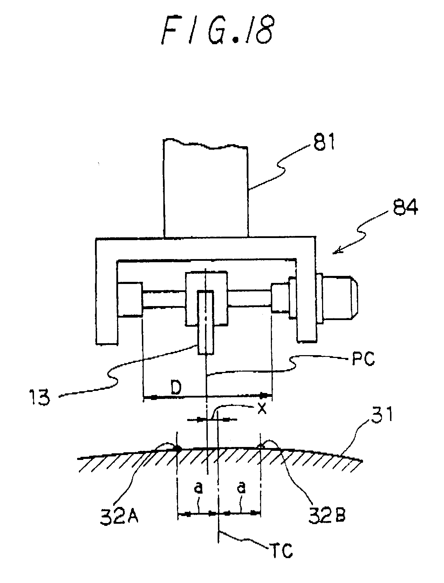

Numeral 13 is a centre deviation detector which comprises, for example, an optical reflection-type displacement sensor capable of scanning along a scan shaft 803 in the direction of arrow D by means of a driving device 84 (see Figure 18). If the aforementioned centre deviation detector 13 is fixed in the central position to the tyre tread surface to detect the radial runout of the tyre and the cutting position to be cut by the cutter is corrected, it can also serve as a radial runout detector.

Numeral 14 is a lateral runout detector for detecting the lateral runout of the tyre which is positioned oppositely to a buttress on the side surface of the tyre spaced therefrom at a predetermined distance m. The detector may be an optical reflection type displacement sensor or the like the position of which is adjustable according to tyre diameter by means of a holding device 141 provided on the tyre support device 2, wherein the detected value provides the input to a control device (not shown) and thereby the mechanism for correction movement of the device for driving the horizontally movable block can be driven.

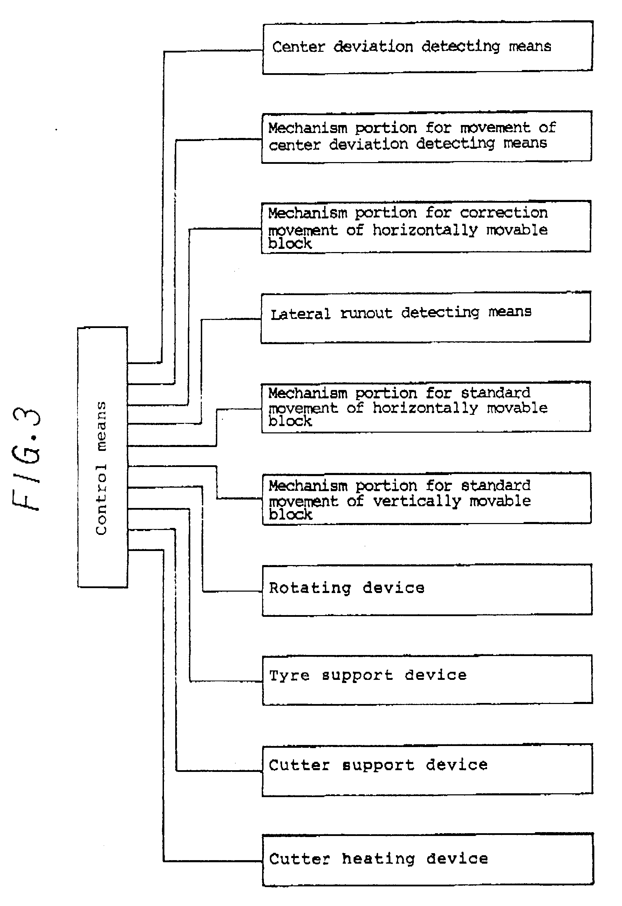

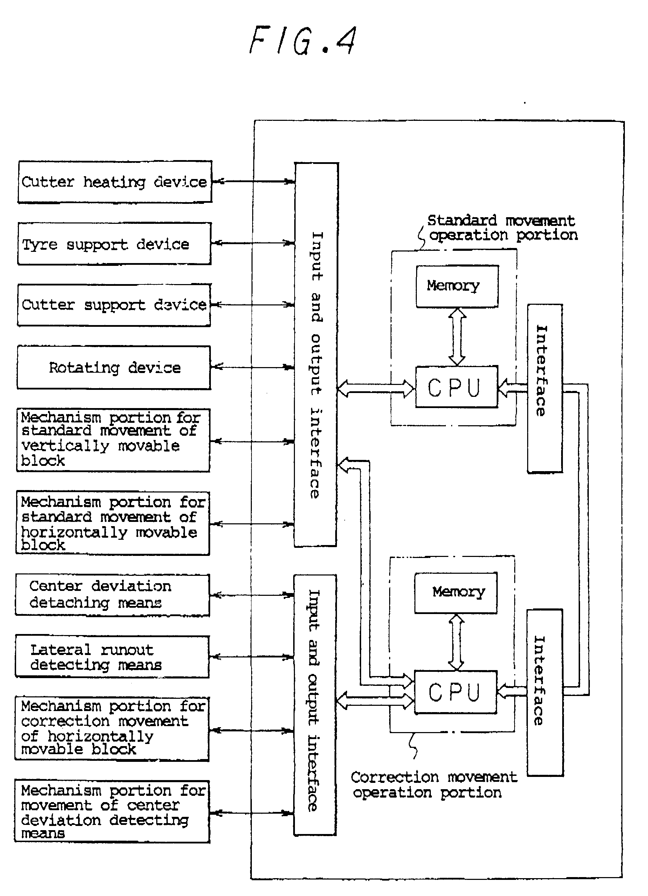

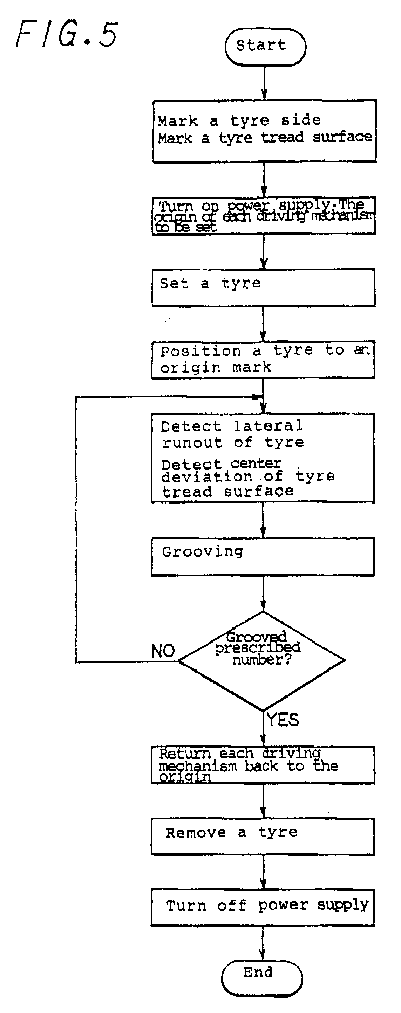

Next will be explained the grooving process using the apparatus having the aforementioned construction for grooving a tyre in reference to the block diagrams shown in Figures 3 and 4 and the flow charts shown in Figures 5 to 17.

As shown in Figures 3 and 4, the tyre grooving apparatus of the present invention comprises a centre deviation detecting means, a cutter heating device, a cutter support device, a tyre support device, a rotating device, a mechanism for standard movement of the vertically movable block, a mechanism for standard movement of the horizontally movable block, a lateral runout detecting means, a mechanism for correction movement of the horizontally moveable block, a mechanism for movement of the centre deviation detecting means and a control means. The aforementioned control means includes a standard movement operating

4

portion and a correction movement operating portion as shown in Figure 4. Each of the aforementioned standard movement operating portion and the correction movement operating portion contains a central processing unit (CPU) and a memory. The standard movement operating portion is connected through an input-output interface to the cutter heating device, the tyre support device 2, the cutter support device 9, the rotating device, the mechanism for standard movement of the vertically movable block and the mechanism for standard movement of the horizontally movable block. The correction movement operating portion is connected through an input-output interface to the centre deviation detecting means, the lateral runout detecting means, the mechanism for correction movement of the horizontally movable block and the mechanism for movement of the centre deviation detecting means. Furthermore, the standard movement operating portion and the correction movement operating portion are connected through the interface to each other.

The programs required for the grooving operation such as a program for controlling the operation of the cutter 10 for a tyre having no runout, a program for controlling the rotation of the tyre and a program for controlling the correction movement operating portion are stored in the memory in the aforementioned standard movement operating portion. The program required for the correcting operation such as the program for controlling the centre deviation detecting means, the program for controlling the lateral runout detecting means, the program for controlling the mechanism portion for correction movement of the horizontally movable block and the program for controlling the mechanism for movement of the centre deviation detecting means are stored in the memory in the aforementioned correction movement operating portion.

A method of grooving by means of the apparatus for grooving a tyre having the aforementioned construction will now be explained with reference to Figures 5 to 17.

Figure 5 is a flow chart for the case of grooving using the data for lateral runout and centre deviation measured in advance.

1) An origin mark is put on the side of the tyre and a detection mark is put on the tyre tread surface. Preferably, the aforementioned origin mark is put at a position coincident with any required wear indicator. Alternatively, the wear indicator itself may be used as the origin mark in place of a separate marking. By way of example, the detection mark has the shape of a small projection which is 1mm in width, 1mm in height and 1mm in length and is formed by means of a concavity provided in the metal mould in which the tyre is cured. Such a detection mark is large enough to be detected by the centre deviation detector 13 but there is no particular limitation on its size. However, if it is too small, it becomes more difficult to detect. The minimum dimension in width, 0.5mm in height and 0.5mm in length. The position where the detection mark is put and the number thereof are selected according to the grooving method.

2) The power supply is turned ON, the origin for each driving mechanism, (device) is set.

3) the tyre 3 whose marked pattern tread is to be grooved is fitted on the tyre support shaft 21 in accordance with the aforementioned process, thus the lateral runout detector 14 is positioned facing the side of the tyre buttress, and the centre deviation detector 13 is positioned facing the tyre tread surface.

4) The tyre is positioned according to the origin mark on the tyre. Namely, the aforementioned origin mark is made coincident with the position of the lateral runout detector 14.

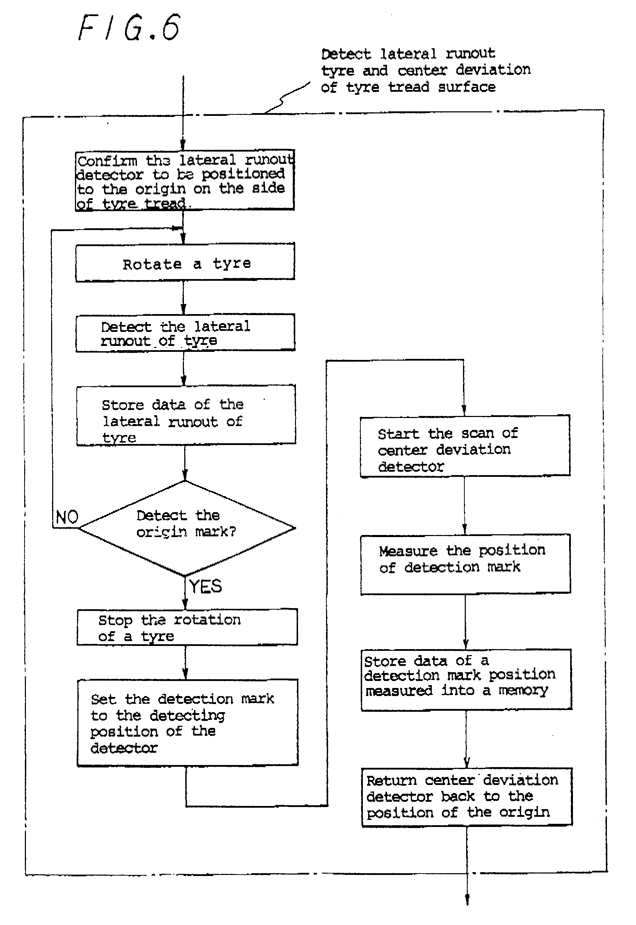

5) The lateral runout of the tyre and the centre deviation of the tyre tread surface is then detected. The examples of the detailed flow charts for this are shown in Figures 6, 8 and 10.

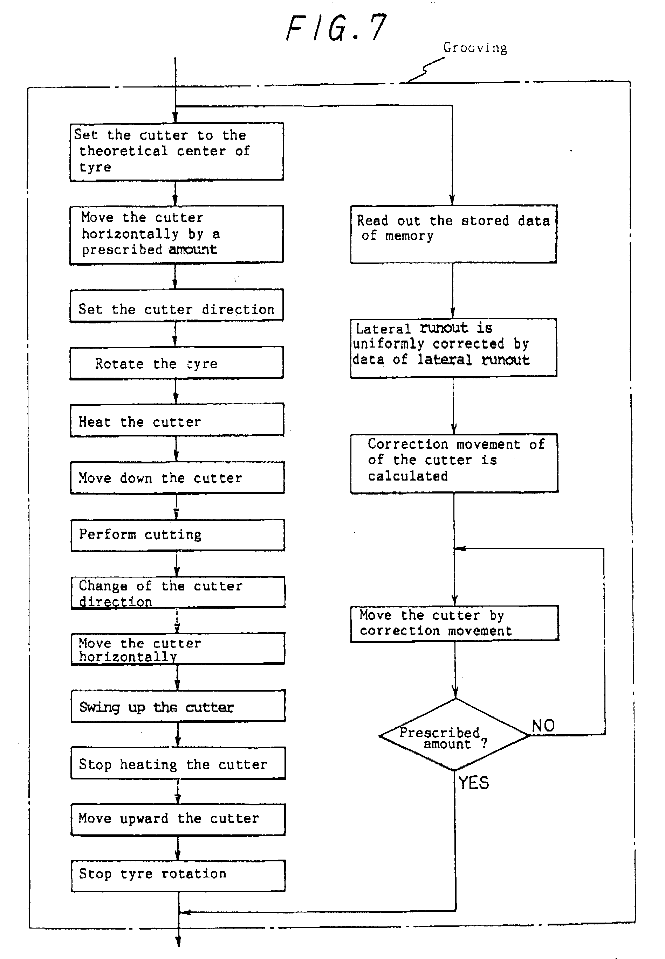

6) Grooving is carried out while correcting the amount of movement of the cutter on the basis of the data of the aforementioned lateral runout and the centre deviation. Examples of the detailed flow chart in relation to this portion are shown in Figure 7, Figure 9 and Figure 11.

7) It is determined whether or not the prescribed number of grooves have been grooved. If it is confirmed that the prescribed number of grooves have been grooved, the next step is followed and if not, the procedure returns to the steps of detecting lateral runout of the tyre and the centre deviation of the tyre tread surface.

8) If the prescribed number of grooves have been grooved, each driving mechanism (device) is returned back to the origin.

9) The grooved tyre 3 is removed from the tyre support shaft 21.

10) The power supply is turned OFF nd the grooving is finished.

Figures 6 and 7 are the detailed flow charts respectively for the portions where the lateral runout of the tyre and the centre deviation of the tyre tread surface are detected and for the portion of the grooving portion in Figure 5, and the flow charts are for one embodiment wherein the centre deviation is detected at only one place. The steps are as follows:

5

EP 0 381 777 B1

(S1) Whether or not the origin mark on the side of the tyre tread is positioned to face the lateral runout detector 14 is confirmed.

(S2) The motor 22 fitted on the tyre support shaft 21 is driven under the control of the controlling means and the tyre 3 is rotated at a low speed in the direction of arrow C in Figure 1.

(S3) The lateral runout of the tyre is detected by the lateral runout detector 14.

(S4) The data for the lateral runout detected in the aforementioned step is stored in the memory in the correction movement operating portion.

(S5) The detection of the lateral runout of the tyre is carried on until the origin mark on the side of the tyre is again sensed.

(S6) When the origin mark is sensed, the rotation of the tyre is stopped.

(S7) The detection mark on the tread surface is set to the detecting position of the centre deviation detector.

(S8) The mechanism for moving the centre deviation detector is driven under the control of the controlling means and the centre deviation detector scans the tyre tread surface.

(S9) The detection mark on the tyre tread surface is detected by the detector 13.

(S10) The position of the detection mark measured by the centre deviation detector 13 is stored in the memory in the correction movement operating portion.

(S11) When the scan is terminated, the centre deviation detector 13 is returned back to the position of the origin under the control of the controlling means.

Figure 18 is a diagram explaining the aforementioned steps (S1) to (S11). In Figure 18, numeral 31 is the tyre tread surface, numerals 32A and 32B are the detection marks provided on the tyre tread surface, numeral 84 is the mechanism for movement of the centre deviation detecting means. PC is a theoretical tread centre, TC is the actual tyre tread centre and X is the amount of centre deviation. In Figure 18, the centre deviation detector 13 scans in the direction of arrow D.

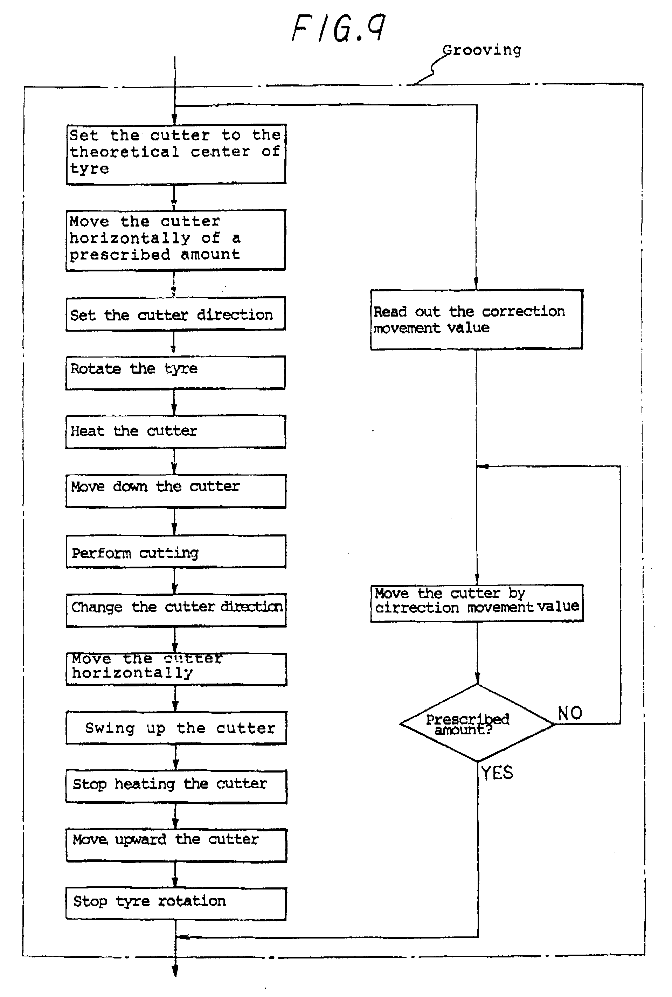

After the data on the lateral runout and the centre deviation are obtained according to the aforementioned steps, the grooving is performed. The detailed flow charts concerning the standard movement in the grooving process are identical with one another. Therefore the aforementioned portion of Figure 7 is explained here and those of other drawings (Figures 9, 11, 14 and 17) are omitted from the explanation of those drawings.

(G1) According to the standard program in the standard movement operating portion, the following process is carried out:

(i) The mechanism for the standard movement of the horizontally movable block is driven and thereby the cutter 10 is set at the theoretical centre of the tyre.

(ii) The mechanism for standard movement of the horizontally movable block is driven again and thereby the cutter 10 is moved to the theoretical position for grooving.

(iii) The motor 11 of the cutter support device 9 is driven and thereby the direction of the cutter is set.

(iv) The motor 22 of the tyre support device 2 is driven and thereby the tyre 3 is rotated at low speed in the direction of the arrow C in Figure 1.

(v) The cutter heating device is turned on and the cutter 10 is heated.

(vi) The mechanism for standard movement of the vertically movable block and if necessary the actuator 12 of the cutter support device 9 are driven, the cutter 10 is moved down by a predetermined amount, and cutting is performed to the predetermined depth.

(vii) Directional changes, lateral movement and the like of the cutter 10 are carried out according to the predetermined grooving pattern, and the cutter is swung up to finish when the predetermined grooving is completed.

(viii) Heating of the cutter 10 is stopped.

(ix) The cutter 10 is moved upwards and away from the tread surface.

(x) Rotation of the tyre is stopped.

(G2) To provide correction the correction movement operating portion controlled by the command of the standard movement operating portion, the following process is carried out along with the aforementioned standard processing operation.

(i) The data on the lateral runout and the centre deviation are read out from the memory of the correction movement operating portion.

(ii) In the CPU of the correction movement operating portion, the data on the lateral runout is corrected based on the data of the centre deviation and the amount of the correction movement of the cutter is calculated. In the example shown in Figure 7, the detection of the centre deviation is performed at only one point, and therefore the data for the lateral runout is corrected evenly by the data of the centre deviation. Figure 19 is a diagram explaining the relationship between the amount of

6

the lateral runout y and that of the centre deviation x and Figure 20 is a graph showing the amount of correction movement of the cutter. Formula (I) shown in Figure 20 is as follows:

$$LRO_1 = LRO_0 + x - y \quad (I)$$

wherein:

| | |
|---|---|
| $LRO_0$ | is the amount of cutter movement corrected by the data of the lateral runout |
| $LRO_1$ | is the amount of cutter movement corrected by the data for the lateral runout and that for the centre deviation |
| x | is the amount of centre deviation |
| y | is the amount of lateral runout |

Formula (I) applied to the example shown in Figure 19 is as follows:

$$LRO_1 = LRO_0 = (-|x|) - (+|y|)$$

(iii) The correction movement of the cutter is conducted according to the amount of the correction movement calculated by the above formula.

(iv) If the correction movement is obtained by the predetermined amount in accordance with the said correction movement, the correcting operation is terminated. If the predetermined amount is not then reached, the correction movement is carried out until it is reached.

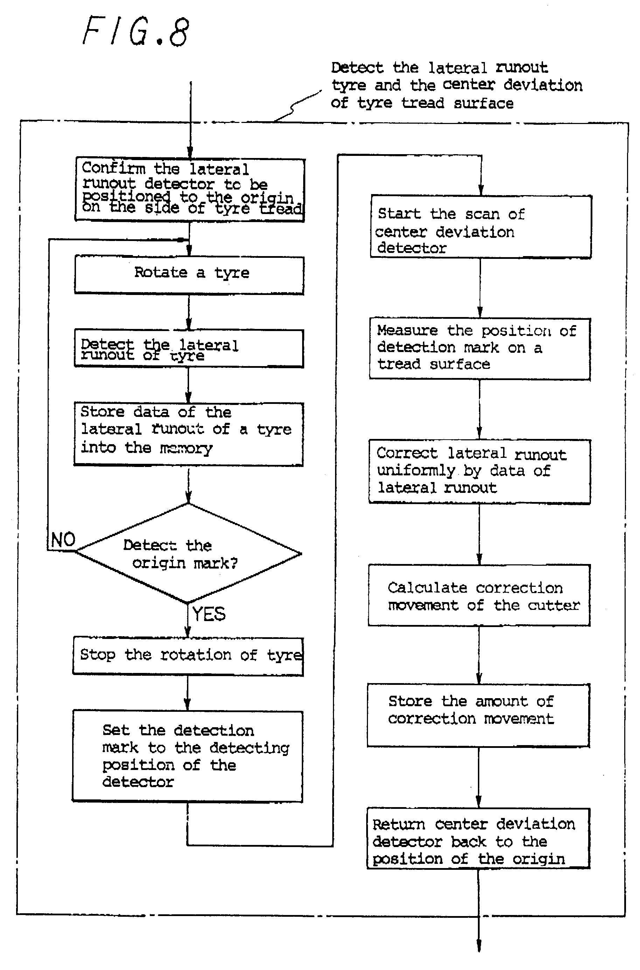

The example shown in Figures 8 and 9 is very similar to the example shown in Figures 6 and 7. However, they differ in that while the amount of correction movement of the cutter is calculated at the time of the grooving in the example of Figures 6 and 7, it is calculated when detecting the lateral runout of the tyre and the centre deviation of the tread surface is performed in the example of Figures 8 and 9. For that reason, the detailed description of the flow chart is omitted.

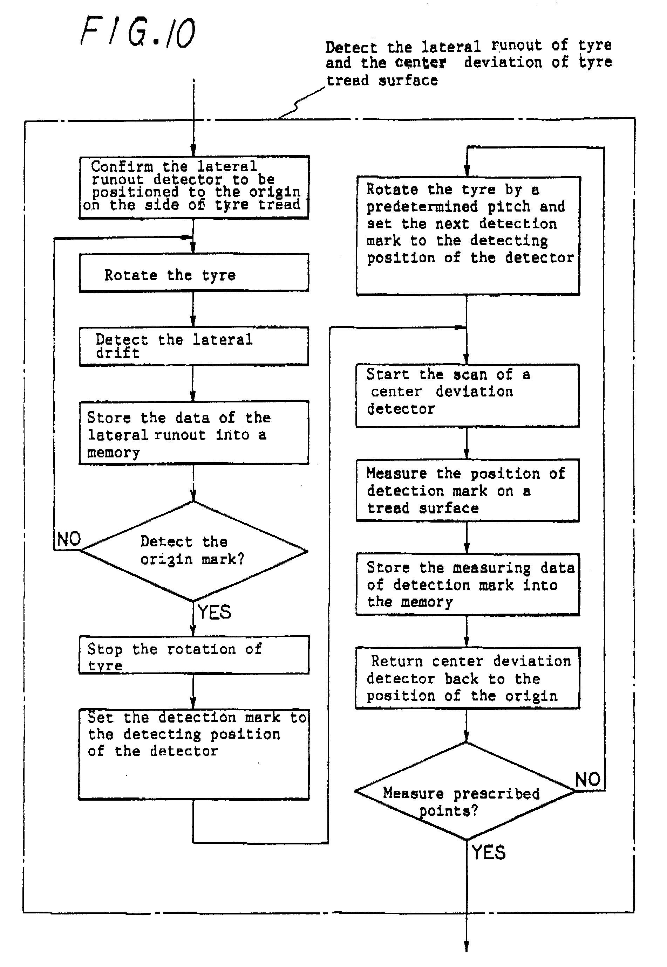

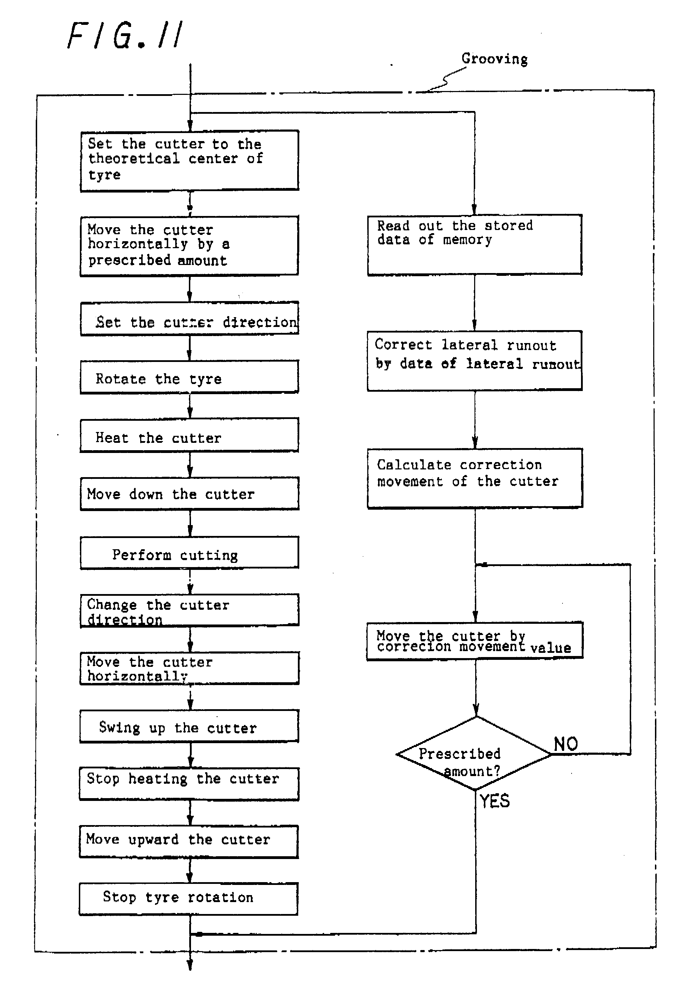

The examples in Figures 10 and 11 are very similar to those in Figures 6 and 7, but they are different in the following respect. Namely, while the centre deviation is detected in only one place in Figures 6 and 7, it is detected in a plurality of places in Figures 10 and 11. Preferably, the centre deviation is detected in 2 to 360 places in is dependent on the ease of doing so and the costs.

In the following the different points in the flow charts shown in Figures 10 and 11 will be described:

(S21) When the first centre deviation measurement is carried out, the tyre is rotated by a predetermined amount and the second centre deviation measurement is carried out.

(S22) Measurement of the centre deviation is repeated as many times as the number of points having detection marks. After completion thereof, the grooving is started.

(G3) In the step grooving, the amount of the movement of the cutter is corrected in the following manner:

(i) The data on the lateral runout and the centre deviation are read from the memory, and thereby the data of the centre deviation is corrected by that of the lateral runout. The amount of centre deviation x used in the above correction is calculated according to the following formula (II):

$$x = \frac{\theta - \theta n}{\theta n+1 - \theta n} \times (X_{n+1} - X_n) + X_n \quad (II)$$

(wherein)

| | |
|---|---|
| $X_n, X_{n+1}$ | are the measured values of centre deviations at n and n + 1 |
| $\theta_n, \theta_{n+1}$ | are rotational angles at n and n + 1 |
| $\theta$ | is the rotational angle at the required position |
| x | is the amount of the centre deviation at the position whose rotational angle is $\theta$.) |

(ii) The amount of correction movement of the cutter is calculated based on the aforementioned amount of centre deviation x according to the formula (I).

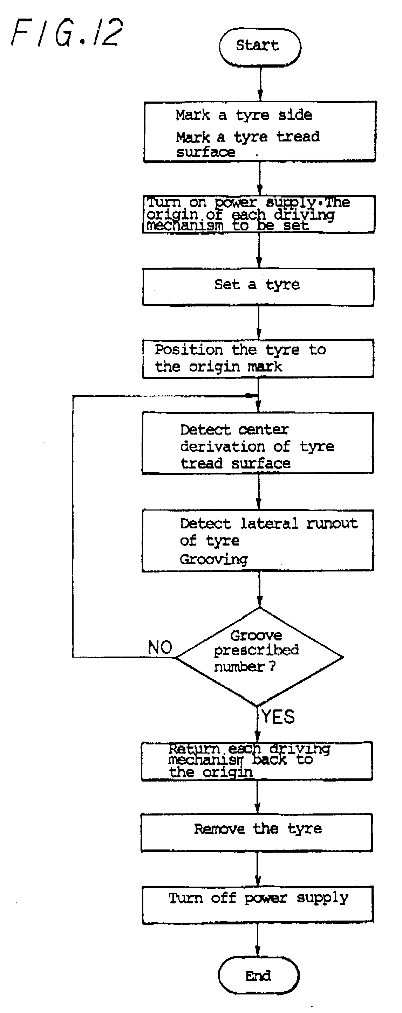

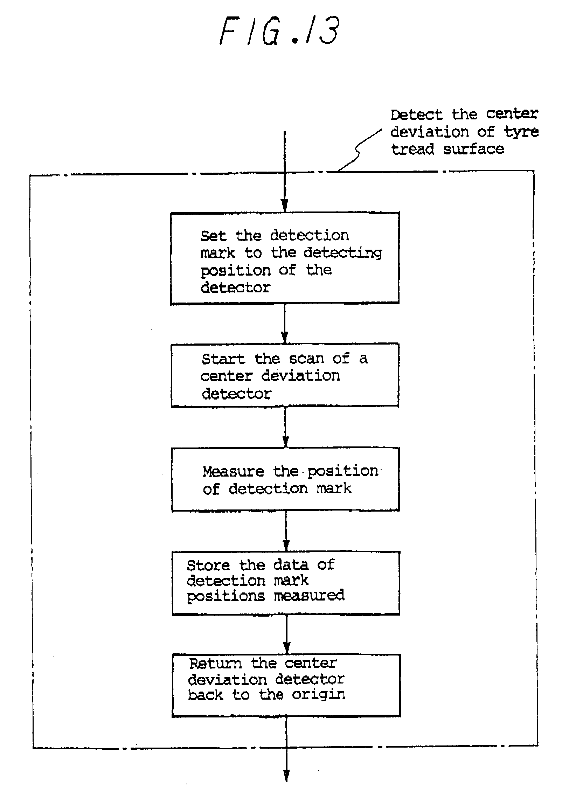

(iii) The correction movement of the cutter is performed on the bases of the aforementioned amount of correction movement. Figure 12 is a flow chart showing the case grooving while detecting the lateral runout of the tyre. It is similar to Figure 5 except that the step of detecting the lateral runout of the tyre is moved to be at the same time as the step of grooving. Figure 13 is a detailed flow chart of the detection of centre deviation of the tyre tread in Figure 12. The flow chart of Figure 13 is similar to that of Figure 6 except that Figure 13 does not include detection of lateral runout, and therefore the detailed description will be omitted.

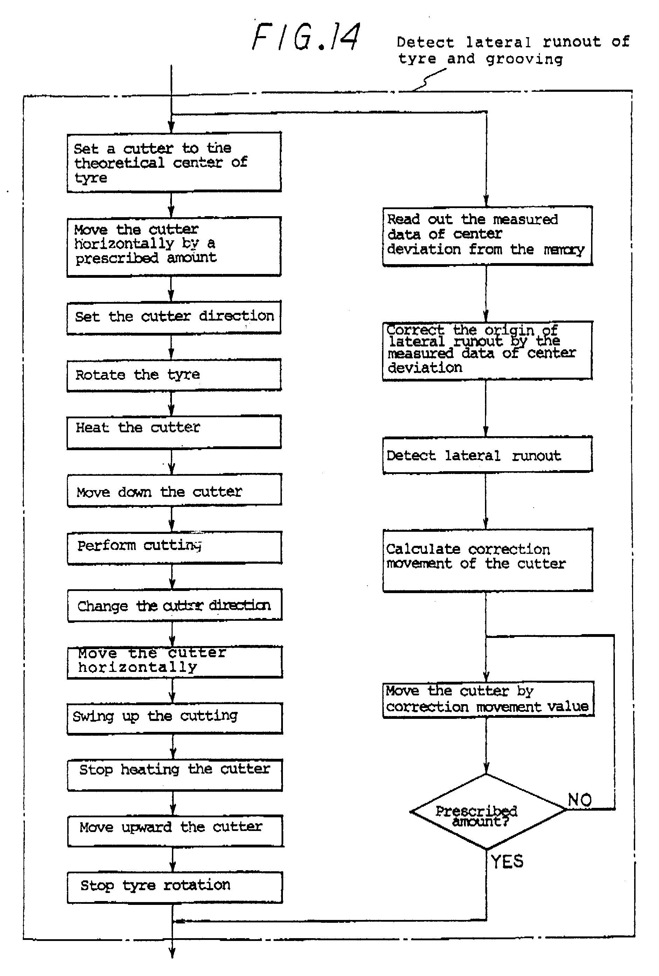

Figure 14 is a flow chart of the steps for detecting the lateral runout and for grooving in Figure 12. The flow chart of Figure 14 is similar to that of Figure 7 except that the position of the origin of the lateral runout is corrected in advance according to the data for the centre deviation stored in the memory in the correction movement operating portion and thereby the lateral runout is detected, and the amount of correction movement of the cutter 10 is calculated on the basis of the measured values of the above lateral runout. Therefore, the detailed description thereof will be omitted.

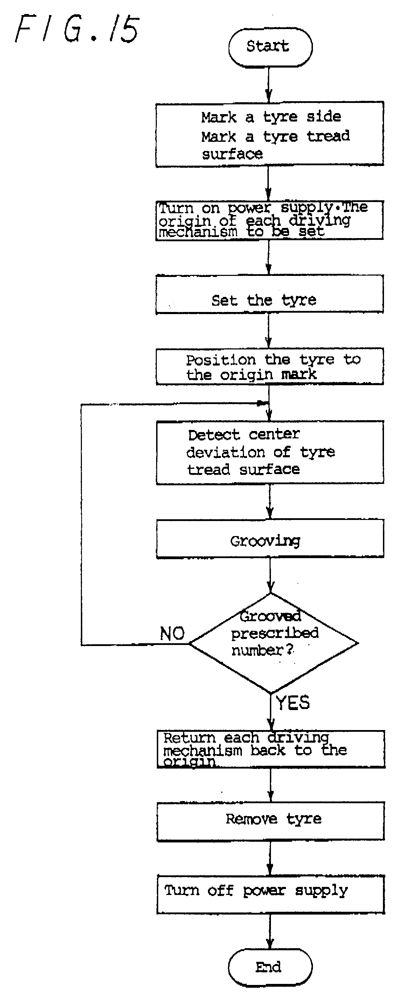

Figure 15 is a flow chart showing the case of carrying out the correction movement of the cutter based only on measurement of the centre deviation of the tyre without detection of the lateral runout thereof. Figure 15 is similar to Figure 5 except that the step of detecting the lateral runout of the tyre is omitted, and therefore the detailed description will be omitted.

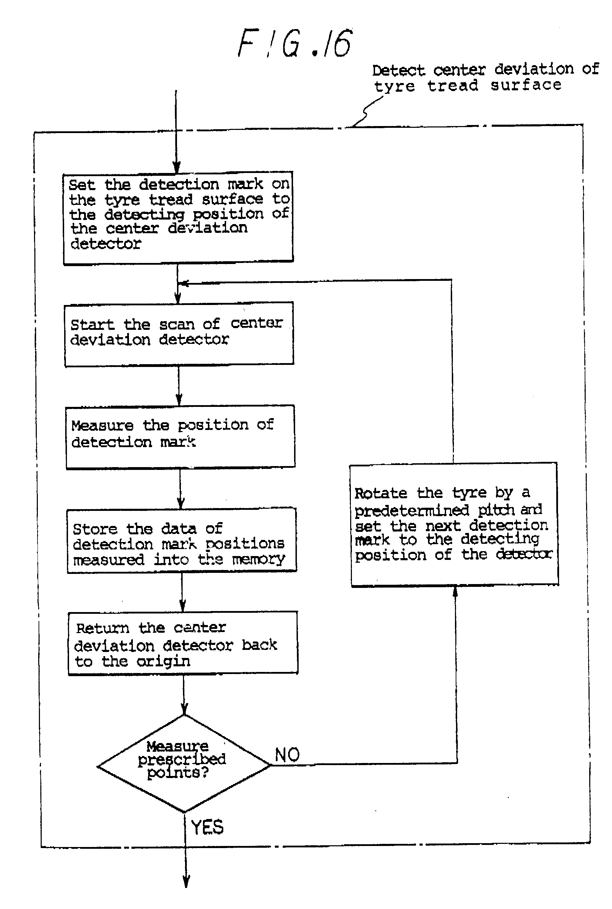

Figure 16 is a detailed flow chart of the steps for detecting the centre deviation on the tread surface. Figure 16 is similar to Figure 10 except that the step for detecting the lateral runout is omitted, and therefore the detailed description will be omitted.

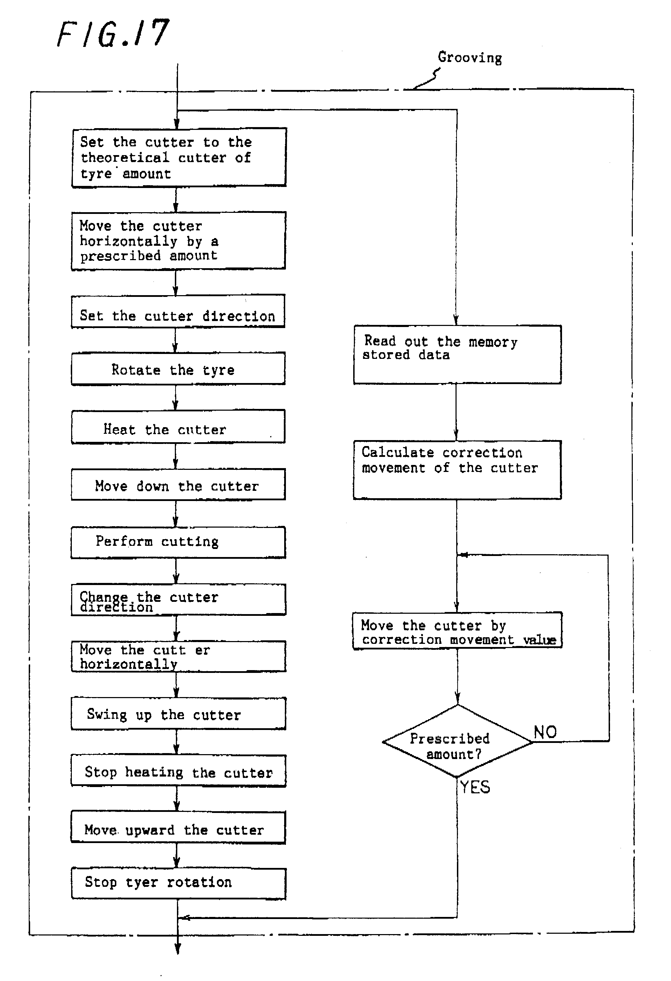

Figure 17 is a detailed flow chart for the grooving step in Figure 15. By way of example, if the detection marks are provided at 360 places on the circumference of the tyre spaced at equal intervals and the amounts of the centre deviations between the detection marks are linearly approximated according to formula (II), the position of the tread centre TC can be known with sufficient accuracy to avoid practical trouble. Therefore, when there are a lot of places where the centre deviation is detected as described above, it is not required to detect the lateral runout of the tyre. Though the example for providing the detection marks at 360 places on the circumference of tyre at equal intervals has been described, the number of places where the detection marks are set is not limited to the above but can suitably be selected in consideration of the required measuring accuracy, the workability and the like However, if the detection marks are provided in at least two places, no practical trouble will occur.

Figure 21 is an explanatory illustration of the construction of one embodiment of the device for driving the horizontally movable block 6. In the example shown in Figure 21, the mechanism for the standard movement comprises; a female threaded body 65 having a driving gear 68 which is rotatably held by means of a bearing on the frame member 51 which is slidably provided over a pair of rails 42 mounted on the base 4; a driving motor 61 which is coupled to a ball screw shaft 62 which is engaged with the aforementioned female body 65 at one end thereof; and a supporting bearing 609 mounted on the base 4 for supporting the other end of the aforementioned ball screw shaft 62.

When the driving motor 61 is driven by the standard program, the ball screw shaft 62 is rotated and therewith the horizontally movable block 5 is moved by the required amount in the Y-axis direction. The mechanism for correction movement comprises: a supporting boss 6 where a plurality of splines are formed in the axial direction, which has a driving gear 67 held rotatably on the frame member 51 by a bearing; a spline shaft 64 which is slidably engaged with the aforementioned supporting boss; a correcting motor 63 which is coupled to one end of the spline shaft 64; and a supporting bearing 610 mounted on the base 4 for supporting the other end of the aforementioned spline shaft 64. Here, the aforementioned driving gear 67 is engaged by a driven gear 68.

When the correction motor 63 is driven according to the correction program in this state, the spline shaft 64 is rotated and the driving gear 67 is rotated. The rotation of the driving gear 67 causes the rotation of the driven gear 68. Thereby, the horizontally movable block 5 is moved by a predetermined correction amount. Because the spline shaft 64 is slidably engaged with the supporting boss 66, the movement of the horizontally movable block 5 by the standard program is not prevented.

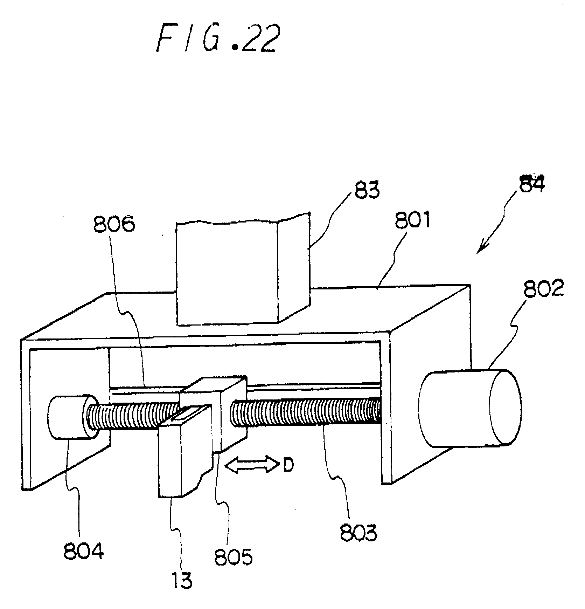

Figure 22 is a schematic view of one embodiment of a device for moving the centre deviation detector 84. In the embodiment shown in Figure 22, the device for moving the centre deviation detector 84 comprises: a U-shaped frame member 801 fixed to the top of a bracket member 83 projecting from the middle bottom surface of the rotating arm 81; a motor 802 provided on a side fragment of the aforementioned frame member 801; a scan shaft 803 connected to the driving shaft of the aforementioned motor 802 and including a ball screw or the like extended inside the U-shaped frame member 801; a bearing 804 provided on the inside surface of the other side fragment for rotatably supporting the end of the aforementioned scan shaft 803; a female threaded body 805 which is engaged on the aforementioned scan shaft 803; and a guide shaft 806 provided between the aforementioned side fragments for preventing the aforementioned female body 805 from being induced to rotate. The aforementioned female body 805 has attached the centre deviation detector 13. When the motor 802 is driven, the female body 805 scans in the direction of arrow D.

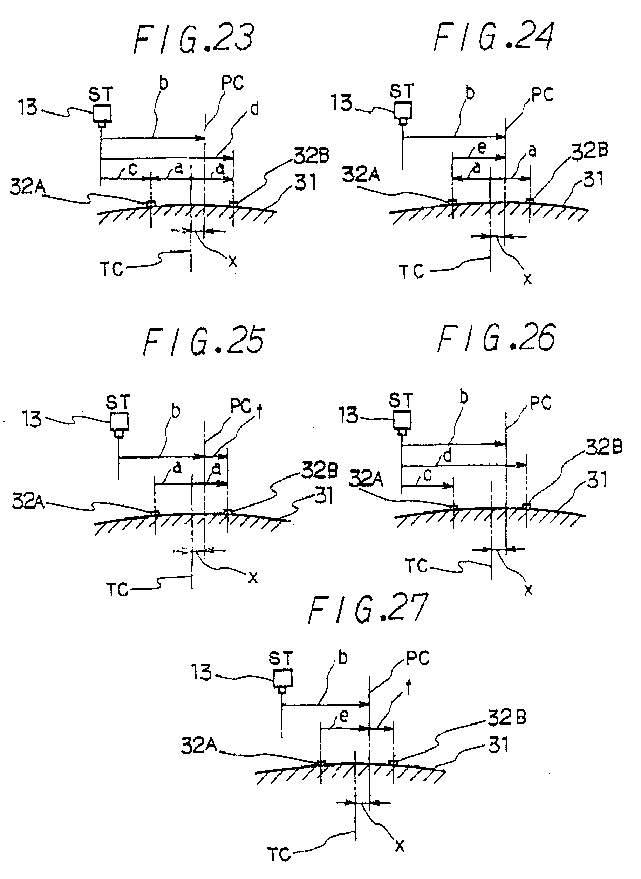

Next, an example of a detection mark for the detection of the centre deviation is described with reference to Figures 23 to 31 of the drawings. The detection mark 32 is provided in an appropriate length in the peripheral direction and a small projection about 1mm in size, which is shaped during curing by a recess provided in the metal tyre mould. The aforementioned mark 32 may be of any type which can be detected by the centre deviation detector 13, and may have any shape, for example, the shape of a concave groove. However, if it is too small, for example, if it is below about 0.5 x 0.5mm, it is difficult to detect.

Furthermore, the detection mark may be provided in one place, or in several places intermittently around the whole or a part of the periphery for a suitable length, or it may be provided continuously in the direction of the circumference. If the detection mark is provided in one place or some places, the rotational positioning of the tyre is to be carried out at the time of the detection, but if it is continuously provided around the full circumference, the aforementioned positioning is not required. Moreover, the detection marks 32 are not always provided on both sides of the tread centre TC but the marks may be provided on only one side or only one mark may be provided in the position of the tread centre TC by selecting 0 (zero) for the constant distance $a$.

In the detecting method of Figure 23, because the detection marks 32A and 32B are provided on both sides at a constant distance $a$ from the tread centre TC respectively, the distance $b$ of the movement from the scan starting point ST to the tread centre PC and the distance $d$ of the movement beyond the tread centre PC to the detection mark 32B are measured, and thereby the amount of centre deviation X can be calculated according to the following formula:

$$x = b - (d-a)$$

In the method for detecting deviations shown in Figure 24, during the movement from the scan starting point ST to the tread centre PC under the control of the standard program, the detection mark 32A is detected and then the amount $e$ of movement up to the tread centre PC is measured, and thereby the amount of centre deviation X can be calculated according to the following formula:

$$X = e - a$$

Moreover, in Figure 25, the detection mark 32B, which is used, is provided on the side beyond the tread centre PC set by the standard program, and the amount $f$ of movement from the aforementioned tread centre PC beyond the detection mark 32B is measured, and thereby the amount of centre deviation X can be calculated by substracting it from the constant distance $a$.

$$X = a - f$$

In the example of the method shown in Figures 26 and 27, the detection mark is provided at an appropriate certain distance and the mark can be detected even if the values of the distance is unknown. In Figure 26, the distance $b$ of movement from the scan starting point ST to the tread centre PC by the standard program, and the distances $c$ and $d$ of movement respectively up to the detection marks 32A and 32E are measured, and thereby the amount of the centre deviation X can be calculated according to the following formula:

$$X = b - c - \frac{d - c}{2}$$

In Figure 27, both the distance $e$, which represents the movement from the detection mark on the side of the scan starting point ST to the tread centre PC set by the standard program, and the distance $f$, which represents the movement from the tread centre PC to the other detection mark 32B, are measured, and thereby the amount of the centre deviation X can be calculated according to the following formula:

$$X = (e - f) / 2$$

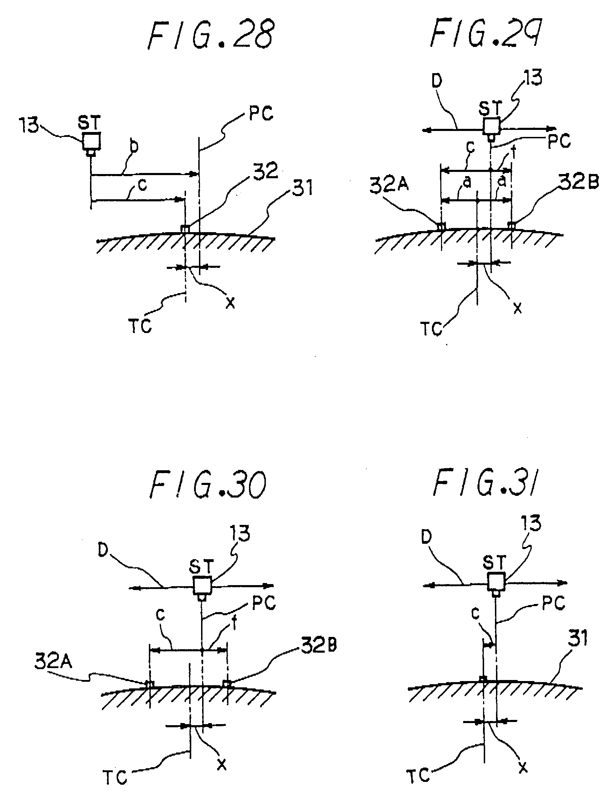

Figure 28 shows the detecting method in the case where the constant distance $a$ is 0 and one detection mark 32 is provided at the tread centre TC of the tyre, wherein the distance $c$ of movement from the scan starting point ST to the detection mark 32 and the distance $b$ of movement to the tread centre PC by the standard program are measured, and the amount of the centre deviation X is calculated by subtracting the former from the latter according to the following formula:

X = b - c

Figures 29, 30 and 31 show examples of detecting methods where the centre deviation detector 13 is scanned right-wards and left-wards from the position of the tread centre PC prespecified by the standard program. Figure 29 shows the case where the detection marks 32A and 32B are provided on both sides at a constant distance $\underline{a}$ from the tread centre TC of the tyre, wherein the amount of the centre deviation X is calculated by subtracting the aforementioned constant distance $\underline{a}$ from the distance $\underline{c}$ or $\underline{f}$ of movements from the scan starting point ST to the detection mark 32A or 32B by scanning:

X = c - a or X = f - a

In the method shown in Figure 30, the amount of centre deviation X can be calculated even if the constant distance $\underline{a}$ is unknown, by the centre deviation detector 13 scanning from the position of the tread centre PC which is the scan starting point ST towards both sides and the distances $\underline{c}$ and $\underline{f}$ or movements to the detection marks 32A and 32B are measured, nd the amount of the centre deviation X is calculated by finding half of the difference therebetween according to the following formula:

X = (c - f) / 2

Furthermore, in Figure 31 the constant distance $\underline{a}$ is 0 and one detection mark 32 is provided at the tread centre TC of the tyre, wherein the centre is displaced by a distance $\underline{c}$ detected from the scan starting point ST to the detection mark 32.

As described above, the present invention comprises: a horizontally movable block for moving a cutter in parallel with a tyre support shaft; a vertically movable block for moving it in the up and down direction; and a detector for detecting the lateral runout of the tyre and a detector for detecting the centre deviation of the tyre or only the latter, wherein the detection marks provided on the tyre tread surface are detected by means of a centre deviation detector which is mounted on the support base capable of moving transversely parallel to the tyre support shaft and scans, in the direction of the tyre support shaft, the distance of movement from the scan starting point to the tread centre PC set by the standard program is measured and the distance of movement from the scan starting point to the detection mark or the distance of movement from the detection mark to the aforementioned tread centre PC is measured, and thereby the amount of centre deviation X is calculated. Therefore, even if the cured tyre has a dimensional difference between the right and left halves of its tread, or if the tyre is deformed by internal pressure, or if the tyre is defectively engaged on the rim, the deviation between the tread centre of the tyre and the cutter supporting device can be simply and surely measured for each individual tyre. Thus, the horizontally movable block and the vertically movable block described above are controlled with the amount of the standard movement, and additionally the value detected by the lateral runout detector is corrected based on the value detected by the centre deviation detector, and thereby the position of the cutter which is set according to the aforementioned amount of the standard movements is corrected by driving a mechanism for correction movement of the horizontally movable block in response to the corrected amount of the correction movement. Therefore, even if the centre deviation is caused by lateral runout of the tyre, or by dimensional differences between right and left halves of its tread caused during the curing, or by deformation due to internal pressure, or by defective engagement with the rim, the positions of grooves relative to the tread centre of the respective tyre can be correctly fixed in their predetermined places. Furthermore, because the amount of the standard movement is always controlled by the value set by the standard program and the amount of correction movement based on the detected value of the lateral runout and centre deviation can be corrected by the separate correction program, the construction of the computer program can be simple and small in size, and thus uniform grooving can be carried out.

Moreover, it is considered that when the detection marks are provided on both sides of the tread centre, both centre deviations are respectively detected from the detection marks on both sides. If different absolute values are obtained, such difference can be interpreted as a change of the relative positions of the detection marks to the tread centre by the swelling deformation of the tyre after curing or the like. In that case the detection accuracy can be improved by obtaining the average value, and further the calculation can be made simpler by positioning the scan starting point to the tread centre set by the standard program.

Furthermore, the detection mark provided on the tread surface may be a small one, and therefore the characteristics of the tyre are not influenced, and there is another advantage that the centre deviation detector can also be used as the device for detecting longitudinal runout in the direction of the tyre

10

diameter.

## Claims

1. A tyre grooving apparatus comprising a tyre support device (2) for rotatably supporting a tyre (3), a rotatable cutter support device (9), a pivotable arm (81) which holds the cutter support device (9) at the free end portion thereof, a vertically movable block (7) having a rotatable shaft (8) which pivotably holds the pivotable arm (81) and a mechanism for standard movement, a horizontally movable block (5) holding the vertically movable block (7) and having a mechanism for standard movement and a mechanism for correction movement which can move the block (5) at least in the transverse direction in parallel with the tyre support shaft of the tyre support device (2), a means (14) for detecting the lateral runout of the tyre, a means (13) for detecting the centre deviation of the tyre and a control means characterised in that the control means comprises a standard movement operation portion which sets the cutter (10) at the theoretical cutting position, and a correction movement operation portion which calculates the amount of correction movement in accordance with input signals from the means (14) for detecting the lateral runout of the tyre and the means (13) for detecting the centre deviation of the tyre, and operates the mechanism for correction movement mounted on the horizontally movable block (4) in accordance with the calculated value.

2. A tyre grooving method for grooving a tyre (3) according to a standard program and characterised by a step of detecting lateral runout of the tyre (3), a step of detecting the centre deviation of the tyre (3), and a step of correcting the grooving position of the cutter (10) in accordance with the detected values of lateral runout and centre deviation.

3. A tyre grooving method according to claim 2, characterised in that the grooving position of the cutter (10) is corrected by a correction program provided independently to the standard program.

4. A tyre grooving method according to claim 2 or 3 characterised in that the step of detecting the lateral runout of the tyre and the step of detecting the centre deviation of the tyre are both performed before grooving.

5. A tyre grooving method according to claim 2 or 3 characterised in that the step of detecting the lateral runout of the tyre is performed during grooving and the step of detecting the centre deviation of the tyre is performed before grooving.

## Patentansprüche

1. Eine Reifennutungsvorrichtung mit einer Reifenhaltevorrichtung (2), die drehbar einen Reifen (3) hält, einer drehbaren Schneidevorrichtungshaltevorrichtung (9), einem schwenkbaren Arm (81), der die Schneidevorrichtungshaltevorrichtung (9) am freien Endabschnitt davon hält, einem vertikal bewegbaren Block (7), der eine drehbare Welle (8), die schwenkbar den schwenkbaren Arm (81) hält, und einen Mechanismus für eine Standardbewegung aufweist, einem horizontal bewegbaren Block (5), der den vertikal bewegbaren Block (7) hält und einen Mechanismus für eine Standardbewegung und einen Mechanismus für eine Korrekturbewegung aufweist zur Bewegung des Blocks (5) wenigstens in der transversalen Richtung parallel zur Reifenhaltewelle der Reifenhaltevorrichtung (2), einem Mittel (14) zum Nachweisen des lateralen Schlags des Reifens, einem Mittel (13) zum Nachweisen der Zentrumsabweichung des Reifens und einem Steuerungsmittel,
**dadurch gekennzeichnet,**
daß das Steuerungsmittel einen Standardbewegungsbetriebsabschnitt, der die Schneidevorrichtung (10) an die theoretische Schneideposition setzt, und einen Korrekturbewegungsbetriebsabschnitt umfaßt, der das Ausmaß der Korrekturbewegung gemäß Eingangssignalen von dem Mittel (14) zum Nachweisen des lateralen Schlags des Reifens und dem Mittel (13) zum Nachweisen der Zentrumsabweichung des Reifens berechnet und den Mechanismus für die Korrekturbewegung, der auf dem horizontal bewegbaren Block (4) angebracht ist, gemäß dem berechneten Wert betreibt.

2. Ein Reifennutungsverfahren zur Ausbildung von Nuten auf einem Reifen (3) gemäß einem Standardprogramm,
gekennzeichnet durch die Schritte,

daß ein lateraler Schlag des Reifens (3) nachgewiesen wird, die Zentrumsabweichung des Reifens (3) nachgewiesen wird, und die Nutungsposition der Schneidevorrichtung (10) gemäß den nachgewiesenen Werten des lateralen Schlags und der Zentrumsabweichung korrigiert wird.

3. Ein Reifennutungsverfahren nach Anspruch 2,
daß die Nutungsposition der Schneidevorrichtung (10) durch ein Korrekturprogramm korrigiert wird, das unabhängig zum Standardprogramm vorgesehen ist.

4. Ein Reifennutungsverfahren nach Anspruch 2 oder 3,
dadurch gekennzeichnet,
daß der Schritt des Nachweisens des lateralen Schlags des Reifens und der Schritt des Nachweisens der Zentrumsabweichung des Reifens beide vor dem Ausbilden der Nuten durchgeführt werden.

5. Ein Reifennutungsverfahren nach Anspruch 2 oder 3,
dadurch gekennzeichnet,
daß der Schritt des Nachweisens des lateralen Schlags des Reifens während des Ausbildens der Nuten durchgeführt wird und der Schritt des Nachweisens der Zentrumsabweichung des Reifens vor dem Ausbilden der Nuten durchgeführt wird.

## Revendications

1. Appareil de sculpture de gorges d'un pneumatique, comprenant un dispositif (2) de support de pneumatique destiné à supporter un pneumatique (3) afin qu'il puisse tourner, un dispositif rotatif (9) de support d'un outil de coupe, un bras pivotant (81) qui maintient le dispositif (9) de support de l'outil de coupe à sa partie d'extrémité libre, un bloc mobile verticalement (7) ayant un arbre rotatif (8) qui maintient de manière pivotante le bras pivotant (81) et un mécanisme de déplacement de référence, un bloc mobile horizontalement (5) qui maintient le bloc mobile verticalement (7) et qui possède un mécanisme de déplacement de référence et un mécanisme de déplacement de correction qui permettent le déplacement du bloc (5) au moins dans la direction transversale qui est parallèle à l'arbre de support du dispositif de support de pneumatique (2), un dispositif (14) de détection du défaut latéral de circularité du pneumatique, un dispositif (13) de détection de l'écart du centre du pneumatique, et un dispositif de commande, caractérisé en ce que le dispositif de commande comprend une partie de manoeuvre de déplacement de référence qui établit l'outil de coupe (10) à la position théorique de coupe, et une partie de manoeuvre de déplacement de correction qui calcule l'amplitude du déplacement de correction d'après les signaux d'entrée du dispositif (14) de détection du défaut latéral de circularité du pneumatique et du dispositif (13) de détection de l'écart du centre du pneumatique, et qui commande le mécanisme de déplacement de correction monté sur le bloc mobile horizontalement (4) en fonction de la valeur calculée.

2. Procédé de sculpture de gorges d'un pneumatique (3) en fonction d'un programme de référence, caractérisé par une étape de détection du défaut latéral de circularité du pneumatique (3), une étape de détection de l'écart du centre du pneumatique (3), et une étape de correction de la position de formation de gorges de l'outil de coupe (10) d'après les valeurs détectées du défaut latéral de circularité et de l'écart du centre.

3. Procédé de sculpture de gorges d'un pneumatique selon la revendication 2, caractérisé en ce que la position de sculpture de gorges de l'outil de coupe (10) est corrigée par un programme de correction qui est indépendant du programme de référence.

4. Procédé de sculpture de gorges d'un pneumatique selon la revendication 2 ou 3, caractérisé en ce que l'étape de détection du défaut latéral de circularité du pneumatique et l'étape de détection de l'écart du centre du pneumatique sont toutes deux réalisées avant la sculpture des gorges.

5. Procédé de sculpture de gorges d'un pneumatique selon la revendication 2 ou 3, caractérisé en ce que l'étape de détection du défaut latéral de circularité est exécutée pendant la sculpture des gorges, et l'étape de détection de l'écart du centre du pneumatique est réalisée avant la sculpture des gorges.

# FIG. 1

# FIG.2

*FIG.3*

```
                                    ┌────────────────────────────────────┐
                                    │ Center deviation detecting means   │
                                    └────────────────────────────────────┘

                                    ┌────────────────────────────────────┐
                                    │ Mechanism portion for movement of  │
                                    │ center deviation detecting means   │
                                    └────────────────────────────────────┘

                                    ┌────────────────────────────────────┐
                                    │ Mechanism portion for correction   │
                                    │ movement of horizontally movable   │
                                    │ block                              │
                                    └────────────────────────────────────┘

                                    ┌────────────────────────────────────┐
                                    │ Lateral runout detecting means     │
                                    └────────────────────────────────────┘

              ┌──────────┐          ┌────────────────────────────────────┐
              │          │          │ Mechanism portion for standard     │
              │ Control  │          │ movement of horizontally movable   │
              │ means    │          │ block                              │
              │          │          └────────────────────────────────────┘
              │          │
              │          │          ┌────────────────────────────────────┐
              │          │          │ Mechanism portion for standard     │
              │          │          │ movement of vertically movable     │
              │          │          │ block                              │
              └──────────┘          └────────────────────────────────────┘

                                    ┌────────────────────────────────────┐
                                    │ Rotating device                    │
                                    └────────────────────────────────────┘

                                    ┌────────────────────────────────────┐
                                    │ Tyre support device                │
                                    └────────────────────────────────────┘

                                    ┌────────────────────────────────────┐
                                    │ Cutter support device              │
                                    └────────────────────────────────────┘

                                    ┌────────────────────────────────────┐
                                    │ Cutter heating device              │
                                    └────────────────────────────────────┘
```

15

EP 0 381 777 B1

# FIG.4

16

*FIG.5*

**Start**

Mark a tyre side
Mark a tyre tread surface

Turn on power supply. The origin of each driving mechanism to be set

Set a tyre

Position a tyre to an origin mark

Detect lateral runout of tyre

Detect center deviation of tyre tread surface

Grooving

Grooved prescribed number? — NO / YES

Return each driving mechanism back to the origin

Remove a tyre

Turn off power supply

**End**

## F I G . 6

Detect lateral runout
tyre and center deviation
of tyre tread surface

Confirm the lateral runout
detector to be positioned
to the origin on the side
of tyre tread.

Rotate a tyre

Detect the lateral
runout of tyre

Store data of the
lateral runout of
tyre

Detect the
origin mark?

NO

YES

Stop the rotation
of a tyre

Set the detection mark
to the detecting
position of the
detector

Start the scan of
center deviation
detector

Measure the position
of detection mark

Store data of a
detection mark position
measured into a memory

Return center deviation
detector back to the
position of the origin

# FIG. 7

Grooving

```
Set the cutter to the
theoretical center of
tyre
        │
        ▼
Move the cutter
horizontally by a
prescribed amount
        │
        ▼
Set the cutter direction
        │
        ▼
Rotate the tyre
        │
        ▼
Heat the cutter
        │
        ▼
Move down the cutter
        │
        ▼
Perform cutting
        │
        ▼
Change of the cutter
direction
        │
        ▼
Move the cutter
horizontally
        │
        ▼
Swing up the cutter
        │
        ▼
Stop heating the cutter
        │
        ▼
Move upward the cutter
        │
        ▼
Stop tyre rotation
```

```
Read out the stored data
of memory
        │
        ▼
Lateral runout is
uniformly corrected by
data of lateral runout
        │
        ▼
Correction movement of
of the cutter is
calculated
        │
        ▼
Move the cutter by
correction movement
        │
        ▼
   Prescribed        NO
    amount ?  ───────
        │
       YES
```

# FIG.8

Detect the lateral runout
tyre and the center deviation
of tyre tread surface

Confirm the lateral
runout detector to be
positioned to the origin
on the side of tyre tread

Rotate a tyre

Detect the lateral
runout of tyre

Store data of the
lateral runout of a tyre
into the memory

Detect the
origin mark?

NO

YES

Stop the rotation of tyre

Set the detection
mark to the detecting
position of the
detector

Start the scan of
center deviation
detector

Measure the position of
detection mark on a
tread surface

Correct lateral runout
uniformly by data of
lateral runout

Calculate correction
movement of the cutter

Store the amount of
correction movement

Return center deviation
detector back to the
position of the origin

# FIG.9

Grooving

Set the cutter to the theoretical center of tyre

Move the cutter horizontally of a prescribed amount

Set the cutter direction

Rotate the tyre

Heat the cutter

Move down the cutter

Perform cutting

Change the cutter direction

Move the cutter horizontally

Swing up the cutter

Stop heating the cutter

Move upward the cutter

Stop tyre rotation

Read out the correction movement value

Move the cutter by cirrection movement value

Prescribed amount?  NO  YES

21

## F I G . 10

Detect the lateral runout of tyre
and the center deviation of tyre
tread surface

```
┌──────────────────────────┐
│ Confirm the lateral      │
│ runout detector to be    │
│ positioned to the origin │
│ on the side of tyre tread│
└──────────────────────────┘
```

```
┌──────────────────────────┐
│     Rotate the tyre      │
└──────────────────────────┘
```

```
┌──────────────────────────┐
│ Detect the lateral       │
│ drift                    │
└──────────────────────────┘
```

```
┌──────────────────────────┐
│ Store the data of the    │
│ lateral runout into a    │
│ memory                   │
└──────────────────────────┘
```

NO ◇ Detect the origin mark?

YES

```
┌──────────────────────────┐
│ Stop the rotation of     │
│ tyre                     │
└──────────────────────────┘
```

```
┌──────────────────────────┐
│ Set the detection mark to│
│ the detecting position   │
│ of the detector          │
└──────────────────────────┘
```

```
┌──────────────────────────┐
│ Rotate the tyre by a     │
│ predetermined pitch and  │
│ set the next detection   │
│ mark to the detecting    │
│ position of the detector │
└──────────────────────────┘
```

```
┌──────────────────────────┐
│ Start the scan of a      │
│ center deviation         │
│ detector                 │
└──────────────────────────┘
```

```
┌──────────────────────────┐
│ Measure the position of  │
│ detection mark on a      │
│ tread surface            │
└──────────────────────────┘
```

```
┌──────────────────────────┐
│ Store the measuring data │
│ of detection mark into   │
│ the memory               │
└──────────────────────────┘
```

```
┌──────────────────────────┐
│ Return center deviation  │
│ detector back to the     │
│ position of the origin   │
└──────────────────────────┘
```

◇ Measure prescribed points? NO

YES

22

# FIG.11

Grooving

```
Set the cutter to the
theoretical center of
tyre
        │
        ▼
Move the cutter
horizontally by a
prescribed amount
        │
        ▼
Set the cutter direction
        │
        ▼
Rotate the tyre
        │
        ▼
Heat the cutter
        │
        ▼
Move down the cutter
        │
        ▼
Perform cutting
        │
        ▼
Change the cutter
direction
        │
        ▼
Move the cutter
horizontally
        │
        ▼
Swing up the cutter
        │
        ▼
Stop heating the cutter
        │
        ▼
Move upward the cutter
        │
        ▼
Stop tyre rotation
```

```
Read out the stored
data of memory
        │
        ▼
Correct lateral runout
by data of lateral runout
        │
        ▼
Calculate correction
movement of the cutter
        │
        ▼
Move the cutter by
correcion movement value
        │
        ▼
     Prescribed        NO
      amount?
        YES
```

# FIG.12

```
                          ( Start )
                              |
                              v
              +------------------------------+
              |  Mark a tyre side            |
              |  Mark a tyre tread           |
              |  surface                     |
              +------------------------------+
                              |
                              v
              +------------------------------+
              | Turn on power supply·The     |
              | origin of each driving       |
              | mechanism to be set          |
              +------------------------------+
                              |
                              v
              +------------------------------+
              |         Set a tyre           |
              +------------------------------+
                              |
                              v
              +------------------------------+
              | Position the tyre to         |
              | the origin mark              |
              +------------------------------+
                              |
      +---------------------->|
      |                       v
      |       +------------------------------+
      |       |  Detect center               |
      |       |  derivation of tyre          |
      |       |  tread surface               |
      |       +------------------------------+
      |                       |
      |                       v
      |       +------------------------------+
      |       |  Detect lateral runout       |
      |       |  of tyre                     |
      |       |  Grooving                    |
      |       +------------------------------+
      |                       |
      |                       v
      |                   /         \
      |          NO      /  Groove   \
      +----------------- | prescribed |
                         \  number ?  /
                          \         /
                              |
                             YES
                              v
              +------------------------------+
              | Return each driving          |
              | mechanism back to            |
              | the origin                   |
              +------------------------------+
                              |
                              v
              +------------------------------+
              |       Remove the tyre        |
              +------------------------------+
                              |
                              v
              +------------------------------+
              |    Turn off power supply     |
              +------------------------------+
                              |
                              v
                          (  End  )
```

# FIG.13

Detect the center
deviation of tyre
tread surface

```
┌─────────────────────┐
│ Set the detection   │
│ mark to the detecting│
│ position of the     │
│ detector            │
└─────────────────────┘
          │
          ▼
┌─────────────────────┐
│ Start the scan of a │
│ center deviation    │
│ detector            │
└─────────────────────┘
          │
          ▼
┌─────────────────────┐
│ Measure the position│
│ of detection mark   │
└─────────────────────┘
          │
          ▼
┌─────────────────────┐
│ Store the data of   │
│ detection mark      │
│ positions measured  │
└─────────────────────┘
          │
          ▼
┌─────────────────────┐
│ Return the center   │
│ deviation detector  │
│ back to the origin  │
└─────────────────────┘
```

# FIG.14

Detect lateral runout of
tyre and grooving

```
Set a cutter to the
theoretical center of
tyre
```
↓
```
Move the cutter
horizontally by a
prescribed amount
```
↓
```
Set the cutter direction
```
↓
```
Rotate the tyre
```
↓
```
Heat the cutter
```
↓
```
Move down the cutter
```
↓
```
Perform cutting
```
↓
```
Change the cutter direction
```
↓
```
Move the cutter
horizontally
```
↓
```
Swing up the cutting
```
↓
```
Stop heating the cutter
```
↓
```
Move upward the cutter
```
↓
```
Stop tyre rotation
```

```
Read out the measured
data of center
deviation from the memory
```
↓
```
Correct the origin of
lateral runout by the
measured data of center
deviation
```
↓
```
Detect lateral runout
```
↓
```
Calculate correction
movement of the cutter
```
↓
```
Move the cutter by
correction movement value
```
↓
◇ Prescribed amount? — NO
YES

## F I G. 15

```
                              ┌─────────┐
                              │  Start  │
                              └────┬────┘
                                   │
                   ┌───────────────▼──────────────┐
                   │   Mark a tyre side           │
                   │   Mark a tyre tread          │
                   │   surface                    │
                   └───────────────┬──────────────┘
                                   │
                   ┌───────────────▼──────────────┐
                   │ Turn on power supply·The     │
                   │ origin of each driving       │
                   │ mechanism to be set          │
                   └───────────────┬──────────────┘
                                   │
                   ┌───────────────▼──────────────┐
                   │   Set the tyre               │
                   └───────────────┬──────────────┘
                                   │
                   ┌───────────────▼──────────────┐
                   │   Position the tyre to       │
                   │   the origin mark            │
                   └───────────────┬──────────────┘
                                   │
                   ┌───────────────▼──────────────┐
                   │   Detect center              │
                   │   deviation of tyre          │
                   │   tread surface              │
                   └───────────────┬──────────────┘
                                   │
                   ┌───────────────▼──────────────┐
                   │   Grooving                   │
                   └───────────────┬──────────────┘
                                   │
                              ◇ Grooved
                     NO      prescribed
                              number?
                                   │ YES
                   ┌───────────────▼──────────────┐
                   │ Return each driving          │
                   │ mechanism back to the        │
                   │ origin                       │
                   └───────────────┬──────────────┘
                                   │
                   ┌───────────────▼──────────────┐
                   │   Remove tyre                │
                   └───────────────┬──────────────┘
                                   │
                   ┌───────────────▼──────────────┐
                   │   Turn off power supply      │
                   └───────────────┬──────────────┘
                                   │
                              ┌────▼────┐
                              │   End   │
                              └─────────┘
```

27

# F I G .16

Detect center deviation of
tyre tread surface

Set the detection mark on
the tyre tread surface to
the detecting position of
the center deviation
detector

Start the scan of center
deviation detector

Measure the position of
detection mark

Store the data of
detection mark positions
measured into the memory

Rotate the tyre by a
predetermined pitch and
set the next detection
mark to the detecting
position of the detector

Return the center
deviation detector back
to the origin

Measure
prescribed
points?

NO

YES

28

# F I G ./7

Grooving

```
┌─────────────────────────┐
│ Set the cutter to the   │
│ theoretical cutter of   │
│ tyre amount             │
└─────────────────────────┘
          │
          ▼
┌─────────────────────────┐
│ Move the cutter         │
│ horizontally by a       │
│ prescribed amount       │
└─────────────────────────┘
          │
          ▼
┌─────────────────────────┐
│ Set the cutter direction│
└─────────────────────────┘
          │
          ▼
┌─────────────────────────┐
│ Rotate the tyre         │
└─────────────────────────┘
          │
          ▼
┌─────────────────────────┐
│ Heat the cutter         │
└─────────────────────────┘
          │
          ▼
┌─────────────────────────┐
│ Move down the cutter    │
└─────────────────────────┘
          │
          ▼
┌─────────────────────────┐
│ Perform cutting         │
└─────────────────────────┘
          │
          ▼
┌─────────────────────────┐
│ Change the cutter       │
│ direction               │
└─────────────────────────┘
          │
          ▼
┌─────────────────────────┐
│ Move the cutt er        │
│ horizontally            │
└─────────────────────────┘
          │
          ▼
┌─────────────────────────┐
│ Swing up the cutter     │
└─────────────────────────┘
          │
          ▼
┌─────────────────────────┐
│ Stop heating the cutter │
└─────────────────────────┘
          │
          ▼
┌─────────────────────────┐
│ Move upward the cutter  │
└─────────────────────────┘
          │
          ▼
┌─────────────────────────┐
│ Stop tyer rotation      │
└─────────────────────────┘
```

```
┌─────────────────────────┐
│ Read out the memory     │
│ stored data             │
└─────────────────────────┘
          │
          ▼
┌─────────────────────────┐
│ Calculate correction    │
│ movement of the cutter  │
└─────────────────────────┘
          │
          ▼
┌─────────────────────────┐
│ Move the cutter by      │
│ correction movement value│
└─────────────────────────┘
          │
          ▼
        ╱ Prescribed ╲  NO
        ╲  amount?   ╱
          YES
```

# F I G. 18

# F I G. 19

# F I G. 20

Amount of movement corrected by
lateral runout value

Theoretical position of the
cutter

Amount of movement corrected
by lateral runout and center
deviation value

# FIG.21

*FIG.22*

# FIG.23

# FIG.24

# FIG.25

# FIG.26

# FIG.27

# FIG.28

# FIG.29

# FIG.30

# FIG.31

# F I G .32